# EUROPEAN PATENT APPLICATION

(11) **EP 3 874 999 A1**
(43) Date of publication of application: **08.09.2021**
(21) Application number: 19880896.6
(22) Date of filing: 29.10.2019
(51) Int. Cl.: A47J 31/40, A23G 1/56, A23L 2/38

(54) **COOKER FOR PREPARING CHOCOLATE SOLUTION, AND CHOCOLATE SOLUTION PREPARATION METHOD**

(30) Priority: 29.10.2018 JP 2018203028
(71) Applicant: Mitsubachi Products Co., Ltd., Tokyo 105-0013 (JP)
(72) Inventor: WEBER, Douglas, Itoshima-shi, Fukuoka 819-1581 (JP); LYN, Craig, Los Angeles, California 90046 (US)
(74) Representative: Eisenführ Speiser
(86) International application number: PCT/JP2019/042400
(87) International publication number: WO 2020/090824

(57) **Abstract**

a cooker for producing a chocolate solution and a method for producing a chocolate solution capable of shortening a production time is provided. The cooker for producing a chocolate solution according to the present invention includes a steam generating part generating a steam by heating water, a cylindrical member including a jetting port at a lower end for jetting a steam generated by the steam generating part, extending downward to guide the steam to the jetting port, and jetting the steam into a vessel containing a chocolate and a liquid, and a stirring shaft arranged inside the cylindrical member, extending downward, and having a stirring blade attached thereto for stirring the chocolate and the liquid.

## Description

### TECHNICAL FIELD

The present invention relates to a cooker for producing a chocolate solution and a method for producing a chocolate solution.

### BACKGROUND ART

In recent years, a cooker for producing a chocolate solution by dissolving chocolate in a liquid such as milk has been disclosed (see, e.g., Patent Document 1).

Patent Document 1: JP 2013-505758 A

### SUMMARY OF THE INVENTION

The conventional cooker for producing a chocolate solution still has room for improvement from the viewpoint of shortening a production time of a chocolate solution.

Therefore, an object of the present invention is to solve the problem and to provide a cooker for producing a chocolate solution and a method for producing a chocolate solution capable of shortening a production time.

To achieve the object, a cooker for producing the chocolate solution according to an aspect of the present invention includes a steam generating part generating a steam by heating water, a cylindrical member including a jetting port at a lower end for jetting a steam generated by the steam generating part, extending downward to guide the steam to the jetting port, and jetting the steam into a vessel containing a chocolate and a liquid, and a stirring shaft arranged inside the cylindrical member, extending downward, and having a stirring blade attached thereto for stirring the chocolate and the liquid.

A method for producing a chocolate solution according to an aspect of the present invention includes a steam generating step of generating a steam by heating water, a steam supplying step of supplying the steam into a vessel containing a chocolate and a liquid from a cylindrical member jetting the steam, and a stirring step of stirring the chocolate and the liquid with a stirring blade inside the cylindrical member.

According to the cooker for producing a chocolate solution and the method for producing a chocolate solution according to the present invention, the production time of the chocolate solution can be shortened.

### BRIEF DESCRIPTION OF DRAWINGS

Fig. 1 is a perspective view of a cooker for producing a chocolate solution according to an embodiment of the present invention.
Fig. 2 is a perspective view of a partially removed state of Fig. 1.
Fig. 3 is an overall configuration diagram of a cooker system for producing a chocolate solution according to an embodiment of the present invention.
Fig. 4 is an exploded view of a jetting unit of Fig. 1.
Fig. 5 is a side view of the jetting unit of Fig. 1.
Fig. 6 is a vertical cross-sectional view of Fig. 5.
Fig. 7 is a bottom view of Fig. 5.
Fig. 8 is an exemplary flowchart of a method for producing a chocolate solution according to an embodiment of the present invention.

### EMBODIMENT(S) FOR CARRYING OUT THE INVENTION

### (Knowledge Underlying the Present Invention)

As a result of intensive studies for shortening a production time of a chocolate solution, the present inventors obtained the following knowledge.

In a conventional cooker for producing a chocolate solution, a heater heating a vessel is disposed at a bottom of the vessel containing a solid chocolate and a liquid. The heat applied to the vessel by the heater is transferred through the vessel to the liquid in the vessel. The heat transferred to the liquid is transferred to the chocolate in the liquid, and the chocolate gradually melts.

In a conventional cooker for producing a chocolate solution, it takes time to produce the chocolate solution due to a variation in temperature distribution generated between a vicinity of the heater and a portion away from the heater in the chocolate and the liquid in the vessel.

On the other hand, the present inventors found a configuration in which a steam is jetted from a cylindrical member to a chocolate and a liquid in a vessel while a stirring blade is rotated to stir the liquid. With this configuration, it was found that the variation in temperature distribution of the chocolate and the liquid can be reduced by stirring the vicinity of the supplied steam with the stirring blade and thereby stirring the chocolate and the liquid in a portion where the temperature tends to increase. It was found that this can shorten the production time of the chocolate solution.

Based on these new knowledges, the present inventors completed the following invention.

A cooker for producing a chocolate solution according to one aspect of the present invention includes a steam generating part generating a steam by heating water, a cylindrical member including a jetting port at a lower end for jetting a steam generated by the steam generating part, extending downward to guide the steam to the jetting port, and jetting the steam into a vessel containing a chocolate and a liquid, and a stirring shaft arranged inside the cylindrical member, extending downward, and having a stirring blade attached thereto for stirring the chocolate and the liquid.

With such a configuration, the vicinity of the supplied steam can be stirred by the stirring blade to stir the chocolate and the liquid in a portion where the temperature tends to increase. As a result, the production time of the chocolate solution can be shortened.

In the cooker, the cylindrical member may include a guide pipe arranged inside the cylindrical member and guiding to the jetting port the steam supplied to an upper portion of the cylindrical member.

With such a configuration, a pressure for the jetting can be increased as compared to when the jetting is performed by the cylindrical member. Since heat dissipation can be suppressed by disposing the guide pipe inside the cylindrical member, a temperature decrease of the supplied steam can be suppressed. Additionally, dew condensation after use of the cooker can be reduced inside the cylindrical member.

In the cooker, the stirring blade may be disposed below a steam port jetting the steam from the guide pipe in the jetting port.

With such a configuration, the chocolate and the liquid can more easily be stirred in a portion where the temperature tends to increase.

In the cooker, a side surface of the cylindrical member may be provided with a diffusion hole diffusing the liquid stirred by the stirring blades to the outside.

With such a configuration, the liquid can be diffused from the diffusion hole to the outside, so that the liquid can more easily be stirred.

The cooker may include an electromagnetic valve opened to start supply of the steam in a supply route through which the steam is supplied from the steam generating part to the jetting unit, and a control part controlling the electromagnetic valve and the stirring shaft, and the control part provides control such that the stirring shaft is rotated after the electromagnetic valve is opened.

With such a configuration, the chocolate solution can more efficiently be produced by supplying the steam into the vessel to warm the chocolate and the liquid before stirring.

The cooker may include a housing in which the steam generating part is housed, and the cylindrical member and the stirring shaft are integrally configured detachably from the housing.

With such a configuration, the cylindrical member and the stirring shaft can be attached to and detached from the housing at the same time. Therefore, the user can easily remove the cylindrical member and the stirring shaft and can easily wash the chocolate solution having adhered to the cylindrical member and the stirring shaft.

In a method for producing a chocolate solution according to an aspect of the present invention includes a steam generation step of generating a steam by heating water, a steam supply step of supplying the steam into a vessel containing a chocolate and a liquid by a cylindrical member jetting the steam; and a stirring step of stirring the chocolate and the liquid by a stirring blade inside the cylindrical member.

With such a production method, the vicinity of the supplied steam can be stirred by the stirring blade to stir the chocolate and the liquid in a portion where the temperature tends to increase. As a result, the variation in the temperature distribution of the chocolate and the liquid can be reduced, so that the method for producing a chocolate solution can be shortened.

In the production method, at the steam supply step, the supply of the steam into the vessel may be started by opening the valve after the steam generation step, and the stirring step may be performed after the supply of the steam is started at the steam supply step.

With such a production method, the chocolate solution can more efficiently be produced by supplying the steam into the vessel to warm the chocolate and the liquid before stirring.

An embodiment of the present invention will now be described in detail with reference to the drawings. In the figures, an X direction indicates a front-rear direction, and a Y direction indicates a left-right direction. The X direction and the Y direction are biaxial directions orthogonal to each other in a horizontal plane. A Z direction indicates a direction orthogonal to the X direction and the Y direction, i.e., a height direction (an up-down direction) of the cooker. The present invention is not limited to this embodiment.

### (Embodiment)

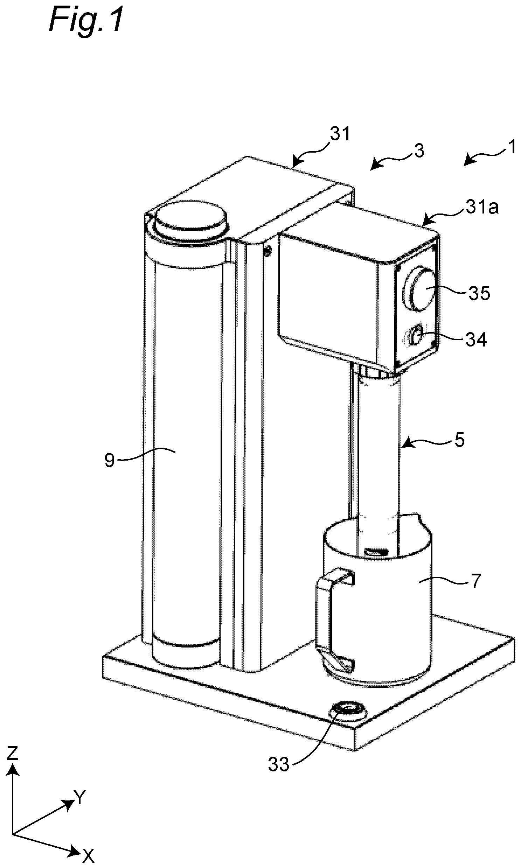

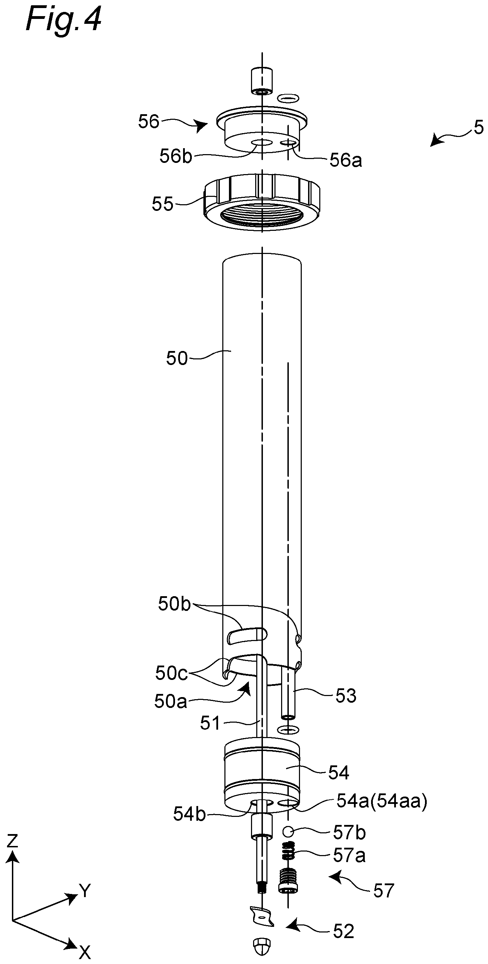

Fig. 1 is a perspective view of a cooker 1 for producing a chocolate solution according to an embodiment of the present invention. As shown in Fig. 1, the cooker 1 includes a main body 3, a jetting unit 5 jetting a steam, a vessel 7 containing a chocolate and a liquid, and a tank 9 storing water. The water contained in the tank 9 is supplied to the main body 3, and a steam is generated in the main body 3. The generated steam is supplied into the vessel 7 by the jetting unit 5 and the liquid in the vessel 7 is stirred by a stirring blade 52 (Fig. 4) described later included in the jetting unit 5, so as to produce a chocolate solution.

In this embodiment, the liquid contained in the vessel 7 is milk, soy milk, tea, coconut milk, coffee, matcha, and water, for example. The liquid may further contain, for example, cinnamon, berries, cashew nuts, and almonds, and various types of combinations are selected depending on a user's preference. The chocolate solution produced by the cooker 1 is a chocolate drink, a chocolate sauce, or a chocolate paste, for example.

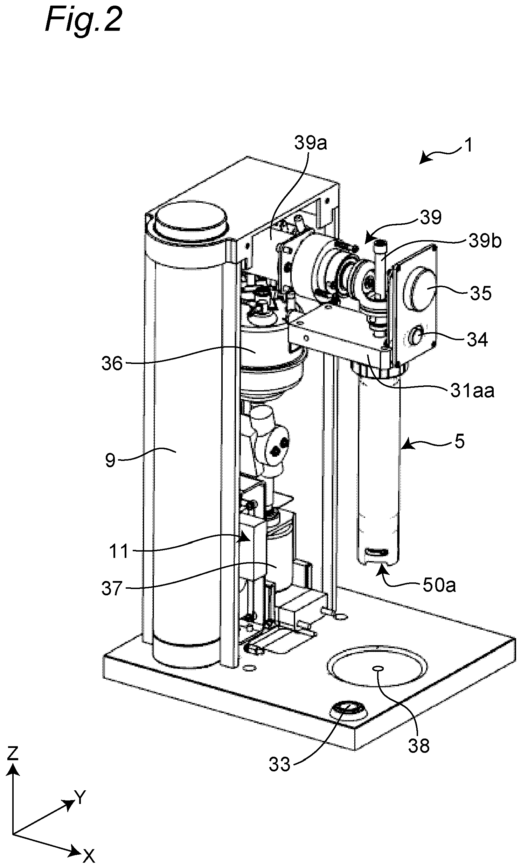

Fig. 2 is a perspective view of a partially removed state of Fig. 1. As shown in Fig. 2, the main body 3 has a steam generating part 36, a pump 37, a drive part 39, and a control part 11. The steam generating part 36 generates a steam by heating water. The pump 37 supplies the water stored in the tank 9 to the steam generating part 36. The drive part 39 drives the stirring blade 52 (Fig. 4). In a base of the main body 3, a vessel temperature sensor 38 detecting the temperature of the vessel 7 is disposed on a portion where the vessel 7 is placed. Therefore, the temperature of the vessel 7 can be prevented from excessively rising when the user places the vessel 7 on the main body 3 for cooking.

The steam generating part 36 heats the water supplied by the pump 37 to generate a steam. In this embodiment, the steam generating part 36 is a boiler. The temperature of the steam generated by the steam generating part 36 is 100 °C or higher, for example. By melting a chocolate with the steam of 100 °C or higher, volatile components of the chocolate are easily released, and a fragrant chocolate solution can be produced. The water supplied by the pump 37 is superheated to, for example, 130 °C by the steam generating part 36, and is supplied as a superheated steam to the vessel 7. The superheated steam can increase an amount of heat to achieve a higher energy as compared to a saturated steam of 100 °C, so that the chocolate contained in the vessel 7 can more easily be melted.

In this embodiment, the steam generating part 36, the pump 37, and the control part 11 are housed in a housing 31. The steam generating part 36 is arranged above the pump 37 in the housing 31. The pump 37 is disposed in the middle of a flow path connecting the tank 9 and the steam generating part 36.

The drive part 39 has a motor 39a and a rotating drive shaft 39b connected to the motor 39a. In this embodiment, the drive shaft 39b is formed to extend in the up-down direction (vertical direction) and is rotated around a vertical axis by rotation of the motor 39a. The drive shaft 39b is arranged in a projecting part 31a projecting forward from the housing 31.

The number of rotations of the drive shaft 39b (the stirring blade 52) is adjusted by an adjustment dial 35 disposed on a front surface of the projecting part 31a. The number of rotations of the drive shaft 39b is 0 to 10000 rpm, for example.

In this embodiment, a flow path for the steam passing therethrough is formed inside a base portion 31aa constituting a lower surface of the projecting part 31a. The flow path is connected to the steam generating part 36.

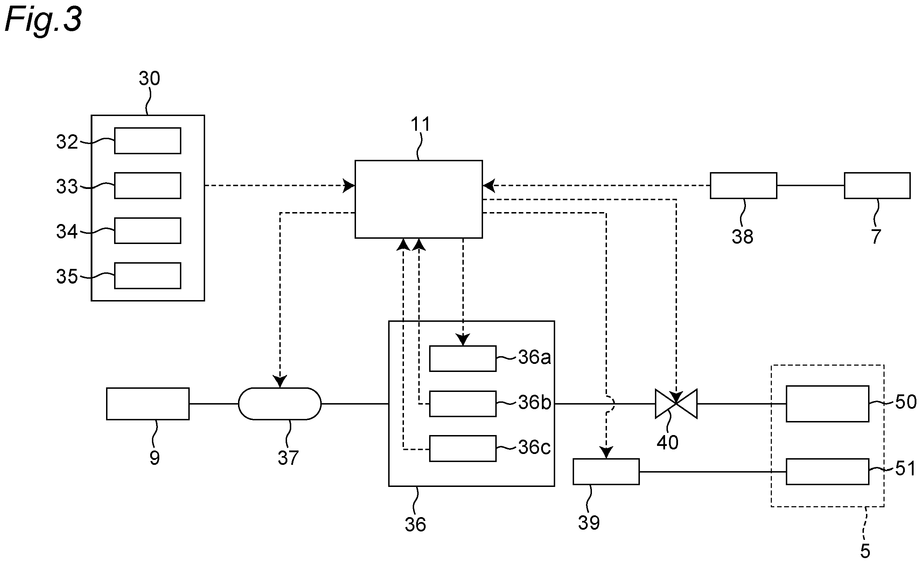

Fig. 3 is an overall configuration diagram of a system of the cooker 1. As shown in Fig. 3, the steam generating part 36 includes a heater 36a, a temperature sensor 36b, and a water level sensor 36c. The heater 36a heats the water supplied from the inside of the tank 9 to the steam generating part 36 by the pump 37. The temperature sensor 36b detects the temperature of the water in the steam generating part 36. The water level sensor 36c detects the water level in the steam generating part 36.

An electromagnetic valve 40 is disposed in a supply route through which the steam is supplied from the steam generating part 36 to the jetting unit 5 (a cylindrical member 50 described later). The electromagnetic valve 40 starts and stops the supply of the steam. The supply of the steam is started by opening the electromagnetic valve 40, and the supply of the steam is stopped by closing the electromagnetic valve 40.

In this embodiment, an operation part 30 operated by the user includes a main body switch 32, a cooking switch 33, a steam switch 34, and the adjustment dial 35. The main body switch 32 switches ON/OFF of the power of the main body. The cooking switch 33 starts and stops the jetting and stirring of the steam. The steam switch 34 switches ON/OFF of the jetting of the steam. The adjustment dial 35 adjusts the number of rotations of the stirring shaft 51.

The jetting unit 5 will be described in detail. Fig. 4 is an exploded view of the jetting unit 5. As shown in Fig. 4, the jetting unit 5 includes a cylindrical member (jetting pipe) 50 and the stirring shaft 51. The cylindrical member 50 includes a guide pipe 53 guiding the steam downward.

The cylindrical member 50 has a jetting port 50a at the lower end for jetting the steam generated by the steam generating part 36. The cylindrical member 50 guides the steam to the jetting port 50a and jets the steam into the vessel 7 containing the chocolate and the liquid. The cylindrical member 50 extends downward and is formed into a cylindrical shape. In this embodiment, the cylindrical member 50 extends vertically downward (in the Z direction) and is formed into a circular cylindrical shape. The jetting port 50a is a portion for jetting the steam in the cylindrical member 50.

The stirring blade 52 is attached to the stirring shaft 51. The stirring blade 52 stirs the chocolate and the liquid. The stirring shaft 51 extends downward from an upper end portion to a lower end portion of the cylindrical member 50 and is arranged inside the cylindrical member 50. In this embodiment, the stirring shaft 51 extends vertically downward and is arranged such that a central axis of the stirring shaft 51 is located on a central axis of the cylindrical member 50. An upper end portion of the stirring shaft 51 is arranged above the upper end portion of the cylindrical member 50 and is connected to the drive shaft 39b of the drive part 39. The stirring shaft 51 rotates in accordance with the rotation of the drive shaft 39b. The stirring blade 52 rotates around the stirring shaft 51 to stir the liquid in the vessel 7. In this embodiment, the stirring blade 52 is disposed on a lower end portion of the stirring shaft 51.

The guide pipe 53 extends downward from the upper end portion of the cylindrical member 50 and guides the steam generated by the steam generating part 26. In this embodiment, the guide pipe 53 extends downward from the upper end portion of the cylindrical member 50 to the vicinity of the stirring blade 52. The upper end portion of the guide pipe 53 is arranged above the upper end portion of the cylindrical member 50 and is connects to the base portion 31aa. An amount of the steam jetted from the guide pipe 53 is 20 ml/min, for example. The guide pipe 53 is arranged above the stirring blade 52 inside the cylindrical member 50. Since the guide pipe 53 is arranged inside the cylindrical member 50, the jetting unit 5 partially has a double-pipe structure. In this embodiment, the guide pipe 53 extends vertically downward at a position eccentric from the center of the cylindrical member 50 in a horizontal plane.

An upper plug 56 and a lower plug 54 are fitted to the cylindrical member 50. The upper plug 56 is a member inserted into the upper end portion of the cylindrical member 50 and fitted to the cylindrical member 50. The upper plug 56 is provided with through-holes 56a, 56b penetrating in the up-down direction. The lower plug 54 is a member inserted into the lower end portion of the cylindrical member 50 and fitted to the cylindrical member 50. The lower plug 54 is provided with through-holes 54a, 54b penetrating in the up-down direction. The guide pipe 53 is inserted into the through-holes 54a, 56a, and the stirring shaft 51 is inserted into the through-holes 54b, 56b.

Due to the upper plug 56 and the lower plug 54, the cylindrical member 50, the stirring shaft 51, and the guide pipe 53 can integrally be handled. Since the movement of the stirring shaft 51 in the horizontal direction is restricted by the lower plug 54, the lower end portion of the stirring shaft 51 can be prevented from being shaken by the rotation of the stirring blade 52.

The cylindrical member 50 and the stirring shaft 51 are integrally configured detachably from the housing 31. Therefore, the cylindrical member 50 and the stirring shaft 51 are configured in an integrally handleable manner. For example, the cylindrical member 50 and the stirring shaft 51 are integrally coupled by a coupling member. In this embodiment, the cylindrical member 50, the stirring shaft 51, and the guide pipe 53 (the jetting unit 5) are integrally coupled by the upper plug 56 and the lower plug 54 and are detachably attached to the housing 31. Specifically, the jetting unit 5 is screwed and fixed to the base portion 31aa of the projecting part 31a (Fig. 1) of the main body 3 by a lock ring 55.

A nozzle 57 jetting the steam guided from the guide pipe 53 is attached to the lower plug 54. The nozzle 57 is detachably attached to the through-hole 54a of the lower plug 54. By changing the nozzle 57, for example, the steam jetted from the nozzle 57 can be changed in pressure, direction, etc.

The nozzle 57 has a spring 57a and a ball 57b. When the steam is supplied from the guide pipe 53 (when the electromagnetic valve 40 is in an open state), the supplied steam causes the ball 57b to press the spring 57a downward. As a result, the ball 57b is separated from the lower end of the guide pipe 53, so that the steam is jetted from the nozzle 57. When the steam is not supplied (when the electromagnetic valve 40 is in a closed state), the spring 57a urges the ball 57b upward, so that the ball 57b closes the guide pipe 53. Therefore, the spring 57a and the ball 57b have a function of a check valve. As a result, the liquid in the vessel 7 can be prevented from flowing back through the guide pipe 53. Therefore, the cleanability of the guide pipe 53 can be improved.

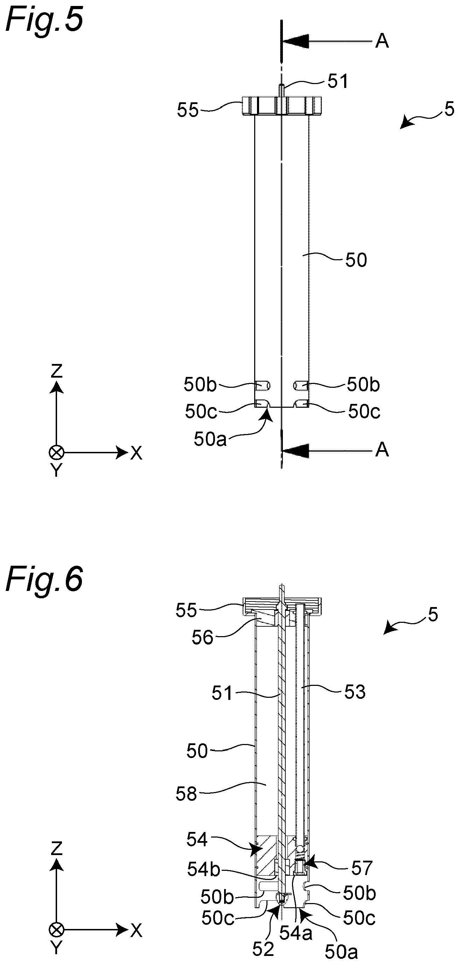

Fig. 5 is a side view of the jetting unit 5. Fig. 6 is a cross-sectional view taken along a line A-A of Fig. 5.

As shown in Figs. 5 and 6, in this embodiment, diffusion holes 50b penetrating in a radial direction are disposed in a side surface of the cylindrical member 50. The diffusion holes 50b are holes diffusing the liquid stirred by the stirring blade 52 to the outside. The diffusion holes 50b are disposed at multiple positions in the side surface of the cylindrical member 50.

The lower end portion of the cylindrical member 50 is provided with concave portions 50c recessed upward. The concave portions 50c are disposed at multiple positions in the lower end portion of the cylindrical member 50. Even when the user stirs the liquid in the vessel 7 with the lower end portion of the cylindrical member 50 brought into contact with an inner bottom of the vessel 7, the liquid can be diffused to the outside of the cylindrical member 50 through spaces between the inner bottom of the vessel 7 and the concave portions 50c.

In this embodiment, the stirring blade 52 is disposed inside the cylindrical member 50 and above the lower end portion of the cylindrical member 50. As a result, the liquid can be stirred at a place closer to a steam port 54aa jetting the steam from the guide pipe 53, and the chocolate and the liquid can be stirred in a portion where the temperature tends to increase.

Since the stirring blade 52 is disposed inside the cylindrical member 50, the user can stir the liquid while the inner bottom of the vessel 7 is in contact with the lower end portion of the cylindrical member 50. Since the stirring blade 52 is not exposed to the outside, safety can be improved.

The stirring blade 52 is disposed below the diffusion holes 50b. As a result, the liquid stirred by the stirring blade 52 can more efficiently be diffused through the diffusion holes 50b.

A space 58 is formed inside the cylindrical member 50 between the upper plug 56 and the lower plug 54. Since the upper plug 56 and the lower plug 54 are fitted and inserted into the cylindrical member 50, the steam and the stirred liquid can be prevented from entering the space 58.

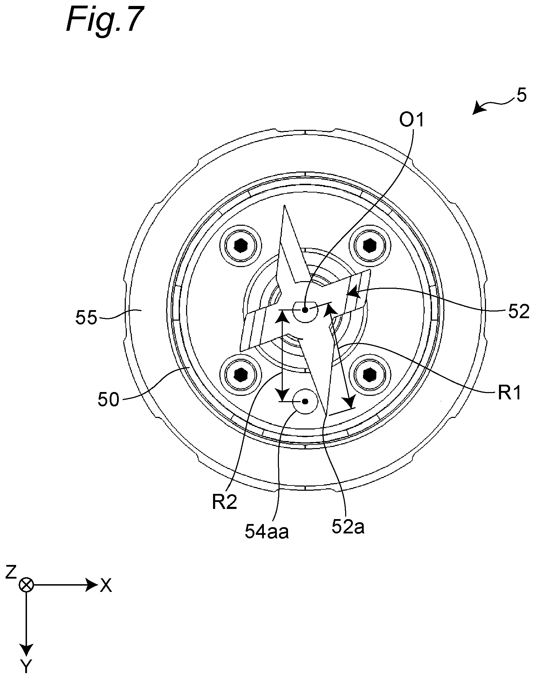

Fig. 7 is a bottom view of the jetting unit 5. As shown in Fig. 7, the stirring blade 52 extends radially outward from the stirring shaft 51. The stirring blade 52 extends radially outward in multiple directions, for example. The stirring blade 52 may be formed into a cutting-edge shape so that a solid material such as a chocolate can be cut or crushed. In this embodiment, the stirring blade 52 is formed such that a radial end portion is bent upward. Therefore, the liquid can more efficiently be stirred.

The stirring blade 52 is disposed around the steam port 54aa (the nozzle 57) jetting the steam from the guide pipe 53. Specifically, the stirring blade 52 is disposed below the steam port 54aa in the jetting port 50a. The steam port 54aa is disposed radially inside a radial end 52a of the stirring blade 52. In this embodiment, a horizontal distance R1 from a rotation center O1 of the stirring blade 52 to the radial end 52a of the stirring blade 52 is larger than a horizontal distance R2 from the rotation center O1 of the stirring blade 52 to the steam port 54aa.

The control part 11 will be described with reference to Fig. 3. The control part 11 is electrically connected to the operation part 30, the steam generating part 36, the pump 37, the vessel temperature sensor 38, the drive part 39, and the electromagnetic valve 40. The control part 11 controls the heater 36a, the pump 37, the drive part 39 (the stirring shaft 51), and the electromagnetic valve 40 based on information from the operation part 30, the temperature sensor 36b, the water level sensor 36c, and the vessel temperature sensor 38.

For example, when the main body switch 32 is turned on, the control part 11 starts adjustment of temperature inside the steam generating part 36. The control part 11 controls the heater 36a based on the information detected by the temperature sensor 36b and the water level sensor 36c to adjust the temperature inside the steam generating part 36.

When a water level L0 detected by the water level sensor 36c is equal to or lower than a predetermined water level L1, the control part 11 provides control such that water is supplied by the pump 37 without turning on the heater 36a. As a result, the steam generating part 36 can be prevented from being heated without water in the part.

When the water level L0 is higher than the water level L1 and lower than the predetermined water level L2 (L1<L2), the control part 11 provides control such that the heater 36a is turned on to heat the inside of the steam generating part 36. When the water level L0 is equal to or higher than the water level L2, the control part 11 provides control such that the water supply by the pump 37 is stopped. The temperature inside the steam generating part 36 is adjusted to 130 °C, for example.

When the temperature sensor 36b detects, for example, a temperature of 150 °C or higher, the control part 11 provides control to open the electromagnetic valve 40. As a result, the pressure in the steam generating part 36 can be prevented from excessively rising.

When the cooking switch 33 is turned on, the control part 11 provides control such that a steam is jetted from the cylindrical member 50 by opening the electromagnetic valve 40 and that the stirring shaft 51 is rotated by the drive part 39 (the motor 39a). In this embodiment, the control part 11 provides control such that the stirring shaft 51 is rotated after the steam generating part 36 generates steam and the electromagnetic valve 40 is opened. Specifically, the control part 11 provides control such that after the steam generating part 36 becomes capable of supplying the steam at a predetermined temperature, the electromagnetic valve 40 is opened and the stirring shaft 51 is then rotated.

When the cooking switch 33 is turned on while the steam switch 34 is on, the jetting unit 5 jets the steam and performs the stirring with the stirring shaft 51. When the steam switch 34 is off, the control part 11 provides control to close the electromagnetic valve 40 so that the steam is not jetted from the cylindrical member 50.

The control part 11 controls the drive part 39 (the motor 39a) based on the number of rotations of the stirring shaft 51 set by the adjustment dial 35.

When the user places the vessel 7 on the main body 3 for cooking, the control part 11 controls the electromagnetic valve 40 based on the temperature information of the vessel 7 detected by the vessel temperature sensor 38. The control part 11 provides control such that the jetting of the steam from the cylindrical member 50 is stopped when the temperature of the vessel 7 reaches 65 °C, for example.

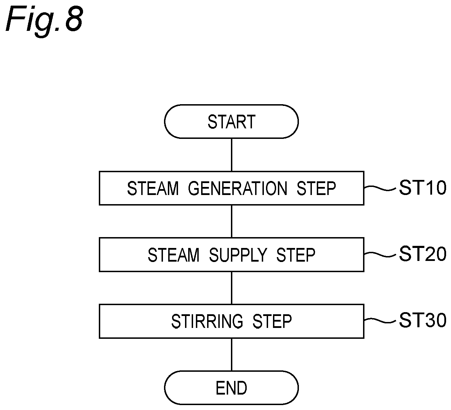

A method for producing a chocolate solution will be described with reference to Fig. 8. Fig. 8 is an exemplary flowchart of a method for producing a chocolate solution.

As shown in Fig. 8, the method for producing a chocolate solution includes a steam generation step ST10, a steam supply step ST20, and a stirring step ST30.

At the steam generation step ST10, a steam is generated by heating water. At the steam supply step ST20, the cylindrical member 50 jetting the steam supplies the steam into the vessel 7 containing a chocolate and a liquid. At the stirring step ST30, the chocolate and the liquid are stirred by the stirring blade 52 inside the cylindrical member 50. In this embodiment, the liquid in the vessel 7 is stirred due to the stirring step ST30 while the steam is supplied into the vessel 7 due to the steam supply step ST20. At the steam supply step ST20, the supply of the steam into the vessel 7 is started by opening the electromagnetic valve 40 after the steam generation step ST10. In this embodiment, after starting the supply of the steam at the steam supply step ST20, the stirring step ST30 is performed.

The chocolate contained in the vessel 7 is dissolved in the liquid in the vessel 7 due to the steam supply step ST20 and the stirring step ST30 so that a chocolate solution is produced.

### [Effects]

The cooker 1 according to this embodiment can provide the following effects.

The cooker 1 according to this embodiment includes the steam generating part 36, the cylindrical member 50, and the stirring shaft 51. The steam generating part 36 generates a steam by heating water. The cylindrical member 50 has the jetting port 50a at the lower end for jetting the steam generated by the steam generating part 36, extending downward to guide the steam to the jetting port 50a, and jetting the steam into the vessel 7 containing a chocolate and a liquid. The stirring shaft 51 is arranged inside the cylindrical member 50, extends downward, and having the stirring blade 52 attached thereto for stirring the chocolate and the liquid.

According to this configuration, since the stirring shaft 51 provided with the stirring blade 52 is arranged inside the cylindrical member 50, the vicinity of the supplied steam can be stirred by the stirring blade 52. Therefore, the chocolate and the liquid can be stirred in a portion where the temperature tends to increase. As a result, a variation in temperature distribution of the chocolate and the liquid can be reduced, so that the method for producing a chocolate solution can be shortened.

The cooker 1 according to this embodiment includes the guide pipe 53 arranged inside the cylindrical member 50 to guide to the jetting port 50a the steam supplied to the upper portion of the cylindrical member 50.

According to this configuration, the guide pipe 53 disposed inside the cylindrical member 50 can more increase a pressure for the jetting as compared to the cylindrical member 50. As a result, the liquid can also be stirred by the jetting of the steam. Since heat dissipation can be suppressed by disposing the guide pipe 53 inside the cylindrical member 50, a temperature decrease of the supplied steam can be suppressed. Additionally, dew condensation after use of the cooker 1 can be reduced inside the cylindrical member 50.

In the cooker 1 according to this embodiment, the stirring blade 52 is disposed below the steam port 54aa jetting the steam from the guide pipe 53 in the jetting port 50a.

According to this configuration, since the stirring blade 52 is disposed below the steam port 54aa, the chocolate and the liquid can more easily be stirred in a portion where the temperature tends to increase.

In the cooker 1 according to this embodiment, the side surface of the cylindrical member 50 may be provided with the diffusion holes 50b diffusing the liquid stirred by the stirring blades 52 to the outside.

According to this configuration, since the diffusion holes 50b are disposed on the side surface of the cylindrical member 50, the liquid can be diffused from the diffusion holes 50b to the outside, so that the liquid can more easily be stirred.

The cooker 1 according to this embodiment includes the electromagnetic valve 40 opened to start supply of the steam in the supply route through which the steam is supplied from the steam generating part 36 to the jetting unit 5, and the control part 11 controlling the electromagnetic valve 40 and the stirring shaft 51. The control part 11 provides control such that the stirring shaft 51 is rotated after the electromagnetic valve 40 is opened.

According to this configuration, the chocolate solution can more efficiently be produced by supplying the steam into the vessel 7 to warm the chocolate and the liquid before stirring.

The cooker 1 according to this embodiment includes the housing 31 in which the steam generating part 36 is housed, and the cylindrical member 50 and the stirring shaft 51 are integrally configured detachably from the housing 31.

According to this configuration, the cylindrical member 50 and the stirring shaft 51 are integrally configured in a detachable manner, so that the cylindrical member 50 and the stirring shaft 51 can be attached to and detached from the housing 31 at the same time. Therefore, the user can easily remove the cylindrical member 50 and the stirring shaft 51 and can easily wash the chocolate solution having adhered to the cylindrical member 50 and the stirring shaft 51. Since the cylindrical member 50 and the stirring shaft 51 are integrally configuring to form an attachment, the cylindrical member 50 and the stirring shaft 51 can easily be replaced in accordance with application.

The method for producing a chocolate solution according to this embodiment includes the steam generation step ST10, the steam supply step ST20, and the stirring step ST30. At the steam generation step ST10, a steam is generated by heating water. At the steam supply step ST20, the steam is supplied into the vessel 7 containing the chocolate and the liquid by the cylindrical member 50 jetting the steam. At the stirring step ST30, the chocolate and the liquid are stirred by the stirring blade 52 inside the cylindrical member 50.

According to this producing method, the vicinity of the supplied steam can be stirred by the stirring blade 52 to stir the chocolate and the liquid in a portion where the temperature tends to increase. As a result, the variation in the temperature distribution of the chocolate and the liquid can be reduced, so that the production time of the chocolate solution can be shortened.

In the method for producing a chocolate solution according to this embodiment, at the steam supply step ST20, the supply of the steam into the vessel 7 is started by opening the valve (the electromagnetic valve 40) after the steam generation step. The stirring step ST30 is performed after the supply of the steam is started at the steam supply step ST20.

According to this production method, the chocolate solution can more efficiently be produced by supplying the steam into the vessel 7 to warm the chocolate and the liquid before stirring.

The present invention is not limited to the embodiment and can be implemented in various other forms. In the embodiment, the cylindrical member 50 includes the guide pipe 53; however, the present invention is not limited thereto. As long as the cooker 1 has the cylindrical member 50, other configurations may be used. In other words, the cylindrical member 50 may not include the guide pipe 53. Even with this configuration, the chocolate and the liquid can be stirred in the portion where the temperature tends to increase.

Although the drive shaft 39b is formed to extend in the up-down direction (vertical direction), the drive shaft 39b (the jetting unit 5) may be formed to extend diagonally downward.

Although the steam generating part 36, the pump 37, and the control part 11 are housed in the housing 31, these may be housed in another place. For example, the steam generating part 36 may be housed in the projecting part 31a.

Although the cylindrical member 50 is formed to extend vertically downward (in the Z direction) into a cylindrical shape, other configurations may be used as long as the member is formed into a cylindrical shape. The cylindrical member 50 may be formed into a square cylindrical shape, for example.

Although the stirring shaft 51 extends vertically downward and is arranged such that the central axis of the stirring shaft 51 is located on the central axis of the cylindrical member 50, the stirring shaft 51 may be shifted from the central axis of the cylindrical member 50.

Although the guide pipe 53 extends vertically downward at a position eccentric from the center of the cylindrical member 50, for example, the guide pipe 53 may have the stirring shaft 51 arranged inside the guide pipe 53 and may be disposed such that the central axis of the guide pipe 53 is located on the central axis of the stirring shaft 51.

Although the stirring blade 52 is provided on the lower end portion of the stirring shaft 51, for example, the stirring blade 52 may be disposed above the lower end portion of the stirring shaft 51.

Although the stirring blade 52 is disposed inside the cylindrical member 50 and is disposed above the lower end portion of the cylindrical member 50, other configurations may be used as long as the vicinity of the supplied steam is stirred by the stirring blade 52. For example, the stirring blade 52 may be disposed below the lower end portion of the cylindrical member 50. Even with this configuration, the chocolate and the liquid can be stirred in the portion where the temperature tends to increase.

Although the jetting unit 5 is screwed and fixed to the base portion 31aa of the projecting part 31a of the main body 3 by the lock ring 55, the jetting unit 5 may have other configurations in which the cylindrical member 50 and the stirring shaft 51 are integrally configured detachably from the housing 31.

Although the diffusion holes 50b penetrating in a radial direction are disposed in the side surface of the cylindrical member 50, and the concave portions 50c recessed upward are disposed in the lower end portion of the cylindrical member 50, the diffusion holes 50b and the concave portions 50c may not be disposed in the cylindrical member 50.

In the base of the main body 3, the vessel temperature sensor 38 detecting the temperature of the vessel 7 is disposed on a portion where the vessel 7 is placed; however, the vessel temperature sensor 38 may be disposed on the vessel 7.

Although the spring 57a and the ball 57b have the function of a check valve, the present invention is not limited thereto. For example, the guide pipe 53 (the cylindrical member 50) may be provided with a pressure valve preventing a backflow. Even in this case, the liquid in the vessel 7 can be prevented from flowing back through the guide pipe 53 (the cylindrical member 50). Therefore, the cleanability of the guide pipe 53 can be improved.

Although the stirring blade 52 is formed such that the radial end portion is bent upward, the present invention is not limited thereto. For example, the stirring blade 52 may extend in the horizontal direction without being bent upward.

Although the stirring step ST30 is performed after the supply of the steam is started at the steam supply step ST20, the present invention is not limited thereto. Therefore, the rotation of the stirring blade 52 and the supply of the steam from the lower end portion of the cylindrical member 50 may be performed in any order. The steam supply step ST20 and the stirring step ST30 may be performed at the same time, for example. The steam supply step ST20 may be performed after the stirring step ST30. Therefore, the steam may be supplied from the lower end portion of the cylindrical member 50 after the rotation of stirring blade 52 is started. Even with these methods, the chocolate and the liquid can be stirred in the portion where the temperature tends to increase, and the production time of the chocolate solution can be shortened.

Although the present invention has been sufficiently described in terms of preferable embodiments with reference to the accompanying drawings, various modifications and corrections are apparent to those skilled in the art. It should be understood that such modifications and corrections are included in the present invention without departing from the scope of the present invention according to the accompanying claims. Changes in combinations and orders of elements in the embodiment may be achieved without departing from the scope and the idea of the present invention.

The cooker for producing a chocolate solution and the method for producing a chocolate solution according to the present invention are useful for producing the chocolate solution in a shortened production time.

### EXPLANATIONS OF LETTERS OR NUMERALS

- 1: cooker
- 3: main body
- 30: operation part
- 31: housing
- 31a: projecting part
- 31aa: base portion
- 32: main body switch
- 33: cooking switch
- 34: steam switch
- 35: adjustment dial
- 36: steam generating part
- 36a: heater
- 36b: temperature sensor
- 36c: water level sensor
- 37: pump
- 38: vessel temperature sensor
- 39: drive part
- 39a: motor
- 39b: drive shaft
- 40: electromagnetic valve
- 5: jetting unit
- 50: cylindrical member
- 50a: jetting port
- 50b: diffusion hole
- 50c: recess
- 51: stirring shaft
- 52: stirring blade
- 53: information pipe
- 54: lower plug
- 54a, 54b: through-hole
- 54aa: steam port
- 55: lock ring
- 56: upper plug
- 56a,: 56b through-hole
- 57: nozzle
- 57a: spring
- 57b: ball
- 58: space
- 7: vessel
- 9: tank
- 11: control part
- ST10: steam generation process
- ST20: steam supply process
- ST30: stirring process

## Claims

1. A cooker for producing a chocolate solution, comprising:
a steam generating part generating a steam by heating water;
a cylindrical member including a jetting port at a lower end for jetting a steam generated by the steam generating part, extending downward to guide the steam to the jetting port, and jetting the steam into a vessel containing a chocolate and a liquid; and
a stirring shaft arranged inside the cylindrical member, extending downward, and having a stirring blade attached thereto for stirring the chocolate and the liquid.

2. The cooker for producing a chocolate solution according to claim 1, wherein the cylindrical member includes a guide pipe arranged inside the cylindrical member and guiding to the jetting port the steam supplied to an upper portion of the cylindrical member.

3. The cooker for producing a chocolate solution according to claim 2, wherein the stirring blade is disposed below a steam port jetting the steam from the guide pipe in the jetting port.

4. The cooker for producing a chocolate solution according to any one of claims 1 to 3, wherein a diffusion hole is disposed in a side surface of the cylindrical member to diffuse the liquid stirred by the stirring blades to the outside.

5. The cooker for producing a chocolate solution according to any one of claims 1 to 4, comprising:
an electromagnetic valve opened to start supply of the steam in a supply route through which the steam is supplied from the steam generating part to the jetting unit, and
a control part configured to control the electromagnetic valve and the stirring shaft, wherein
the control part controls such that the stirring shaft is rotated after the electromagnetic valve is opened.

6. The cooker for producing a chocolate solution according to any one of claims 1 to 5, comprising:
a housing in which the steam generating part is housed, wherein
the cylindrical member and the stirring shaft are integrally configured detachably from the housing.

7. A method for producing a chocolate solution comprising steps of:
generating a steam by heating water,
supplying the steam into a vessel containing a chocolate and a liquid by a cylindrical member jetting the steam; and
stirring the chocolate and the liquid by a stirring blade inside the cylindrical member.

8. The method for producing a chocolate solution according to claim 7, wherein
at the supplying the steam, the supply of the steam into the vessel is started by opening the valve after the generating the steam, and wherein
the stirring the chocolate and the liquid is performed after the supply of the steam is started at the supplying the steam.
